# EUROPEAN PATENT APPLICATION

(11) **EP 1 801 792 A1**
(43) Date of publication of application: **27.06.2007**
(21) Application number: 05793168.5
(22) Date of filing: 13.10.2005
(51) Int. Cl.: G11B 7/0045, G11B 7/0055, G11B 20/10

(54) **METHOD AND DEVICE FOR MOVING COPY-ONCE CONTENT**

(30) Priority: 14.10.2004 JP 2004300025
(71) Applicant: FUJIFILM Corporation, Minato-ku Tokyo 106-8620 (JP)
(72) Inventor: USAMI, Yoshihisa, ome, Odawara-shi, Kanagawa;2500 001 (JP)
(74) Representative: HOFFMANN EITLE
(86) International application number: PCT/JP2005/018831
(87) International publication number: WO 2006/041110

(57) **Abstract**

A method and apparatus for moving copy-once contents to a different recording medium, making it impossible to reproduce information on a write-once recording medium. When copy-once contents recorded on a write-once recording medium are moved to a recording medium which is different from the write-once recording medium, a signal different from that recorded in an information recording area of the write-once recording medium is recorded in the information recording area, thereby making it impossible to reproduce information of the write-once recording medium.

## Description

### TECHNICAL FIELD

The present invention relates to a method and apparatus for moving recorded copy-once contents to a different recoding medium.

### BACKGROUND ART

The term "copy-once contents" is utilized to refer to a program that is recordable only once, and it can be said that a considerable number of programs of digital terrestrial broadcasting correspond thereto. The copy-once contents include a digital signal incorporated therein and controlling the number of times of dubbing, and therefore, a recorded program cannot be dubbed (copied) into a different recording medium. Accordingly, there is a high possibility that an increase of such copy-once contents could change what not only future digital recorders, but also recording media, should be in view of determining the final storage location of the contents.

To reproduce contents such as audio data or video data, optical information recording media such as CD-R, CD-RW, DVD-R, DVD-RW and DVD-RAM may be used. Meanwhile, from the standpoint of preventing illegal copying of contents having copyrights, a process referred to as "move" (data moving processing in which contents are read out from a recording medium and outputted outside, and at the same time, the contents recorded on the recording medium are deleted) is carried out, and various approaches have been examined (for example, refer to patent document 1).

As the recording medium that can be applied to the aforementioned move, recording media of DVD-RW type and DVD-RAM type, a hard disk (HDD) and the like are exemplified. However, in a write-once recording medium such as that of DVD-R type, no attempt to apply the move thereto has been made. It is considered that with write-once, read-many recording media there is little need to do so. In the meantime, the write-once recording media are inexpensive as compared to rewritable recording media, and therefore, if a processing method and apparatus which could provide the same functions as the move were developed, such write-once recording media would be very significant from the viewpoint of giving consideration to user's convenience, while effectively achieving copyright protection. Further, it is considered that, accompanying a future increase of copy-once contents, demand would also be enhanced for the application thereof to write-once recording media. Patent document 1: JP-A No. 2004-110309

### DISCLOSURE OF THE INVENTION

### Problems to be solved by the Invention:

In view of the aforementioned circumstances, an object of the present invention is to solve the conventional problems as mentioned above. That is, the object of the present invention is to provide a processing method and apparatus which can provide the same functions as those of the move for a write-once recording medium with copy-once contents recorded thereon.

### Means for solving the problems:

The aforementioned object can be achieved by the following invention.

That is to say, a first aspect of the present invention is provided by a method for moving copy-once contents, in which copy-once contents recorded on a write-once recording medium are moved to a recording medium which is different from the write-once recording medium, said method comprising: moving the copy-once contents to the different recording medium; and recording, in an information recording area of the write-once recording medium, a signal which is different from that recorded in the information recording area, thereby making it impossible to reproduce information of the write-once recording medium.

Preferably, recording of the different signal is carried out using a power that is at least one fourth of the optimum recording power.

Further, a second aspect of the present invention is provided by an apparatus for moving copy-once contents, which causes copy-once contents recorded on a write-once recording medium to be moved to a recording medium which is different from the write-once recording medium, said apparatus comprising: a moving means for moving the copy-once contents to the different recording medium; and a signal re-recording means that, when the moving means moves the copy-once contents to the different recording medium, records, in an information recording area of the write-once recording medium, a signal which is different from that recorded in the information recording area.

Still further, a third aspect of the present invention is provided by an apparatus for moving copy-once contents, comprising: a readout section that reads out copy-once contents recorded on a write-once recording medium; a signal re-recording section that records, in an information recording area of the write-once recording medium, a signal which is different from that recorded in the information recording area; and a control section that allows the copy-once contents to be stored in a recording medium which is different from the write-once recording medium.

### Effects of the Invention:

According to the present invention, it is possible to provide a processing method (a method for moving copy-once contents) and a processing apparatus (an apparatus for moving copy-once contents), which method and apparatus can provide the same functions as those of move for a write-once recording medium with copy-once contents recorded thereon.

### BRIEF DESCRIPTION OF THE DRAWINGS

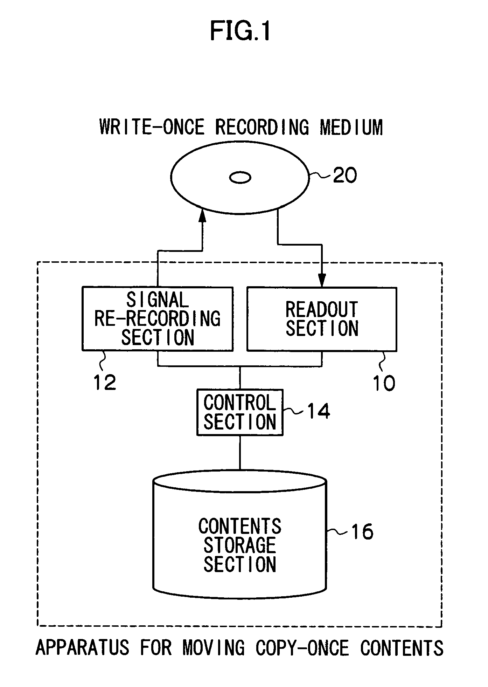

Fig. 1 is a schematic diagram of an apparatus for moving write-once contents.

### BEST MODE FOR CARRYING OUT THE INVENTION

### [Method for moving copy-once contents]

The method for moving copy-once contents according to the present invention is a method for moving copy-once contents recorded on a write-once recording medium to a recording medium that is different from the write-once recording medium. When the copy-once contents are moved to the different recording medium, a signal different from that recorded in an information section (that is, an information recording area) of the write-once recording medium is recorded in the information section, so as to make it impossible to reproduce information of the write-once recording medium.

Any well known technique can be applied to allow copy-once contents recorded on a write-once recording medium to be recorded on a different recording medium. Ordinary DVD recorders with a HDD are equipped with functions of recording contents from a DVD-R to the HDD. For example, a recorder "DVR-520H-S" produced by Pioneer Electronic Corporation is exemplified. So long as contents are recorded from the DVD-R to the HDD and data of the DVD-R is prevented from being read out, it is possible to prevent reproduction of data (copy-once contents) of the DVD-R and also to move the data to the HDD.

The term "write-once recording medium" mentioned herein refers to a recording medium that allows recording of information only once, and examples thereof include recording media of CD-R type and DVD-R type, a write-once, read-many blue-ray disk, write-once, read-many HD (High Definition) DVD, and the like. Further, as long as the "different recording medium" as described above is any other recording medium which is different from the write-once recording medium with the copy-once contents recorded thereon, it is not particularly limited. Examples thereof include, in addition to the write-once recording medium, recording media of DVD-RW type and DVD-RAM type, a hard disk (HDD) and the like.

When the contents are moved to a different recording medium in such a manner as described above, a signal which is different from the signal recorded in the information section of the write-once recording medium is recorded in the information section in such a manner as to be superimposed on the previously recorded signal. The information section is a region in which disk information of the write-once recording medium is recorded, and refers to a region with a cryptographic key, copyright protection information, FAT or the like recorded therein. Due to different signals being recorded in a state of being superimposed on each other as described above, it is possible to prevent copy-once contents recorded on the write-once recording medium from being normally reproduced after they have been moved. As a result, the same effects as those of so-called "move" can be obtained. Further, different signals are selectively recorded in the information section, and therefore, it can be said that the aforementioned method is more efficient than a method that makes it impossible to reproduce information of an entire disk. Moreover, some or all of a normal information section may also be made nonreproducible. This is a time consuming method but is a method that reliably makes it impossible to reproduce information.

Preferably, recording of a different signal is carried out using a power that is at least one fourth of optimum recording power, and more preferably at least one half thereof. When the power that is at least one fourth of the optimum power is used to carry out the recording, it is possible to reliably prevent reproduction of copy-once contents recorded on a write-once recording medium.

The different signal may be recorded either in DC form or in an intermittent manner. The "DC" recording mentioned herein refers to recording of a signal by using one pulse, and not using emission of a laser based on plural pulses generated intermittently, thereby allowing recording of one pit. The intermittent operation has the effect of extending the life span of a laser as compared to the other one. Specifically, the recording can be carried out using a disk tester such as Model DDU1000 manufactured by Pulstec Industrial Co., Ltd. Further, even when a normal DVD recorder is used, the aforementioned recording can be carried out if the software or hardware thereof is modified.

### [Apparatus for moving write-once contents]

The apparatus for moving write-once contents according to the present invention is an apparatus for moving copy-once contents which causes copy-once contents recorded on a write-once recording medium to be moved to a recording medium which is different from the write-once recording medium. A description will be given, with reference to the accompanying drawing, of an apparatus for moving write-once contents, which apparatus is applied to the method for moving write-once contents according to the present invention.

The aforementioned apparatus includes, as shown in Fig. 1, a readout section 10 which reads out write-once contents of a write-once recording medium 20, and a signal re-recording section 12 which re-records a signal on the write-once recording medium 20. Further, the apparatus also includes a control section 14 that controls the readout section 10 and the signal re-recording section 12, and a contents storage section (for example, a hard disk) 16 in which the read out write-once contents are stored.

In the aforementioned apparatus for moving copy-once contents, copy-once contents of the write-once recording medium 20 are read out by the readout section 10, and when the contents are moved to the contents storage section 16 which is a different recording medium, a signal that is different from a signal recorded in an information section (that is, an information recording area) of the write-once recording medium 20 is recorded in the information section by the signal re-recording section 12. Due to the different signals being recorded in a state of being superimposed on each other as described above, the copy-once contents recorded on the write-once recording medium can be prevented from being normally reproduced after they have been moved.

The details of the different signals and the like are as described with regard to the aforementioned method for moving copy-once contents. Further, movement of write-once contents is managed based on additional information in the information section of the write-once contents. When the write-once contents are moved, the additional information saved at the origin of the movement is updated in accordance with a fixed rule, and is passed to the destination of the movement, and subsequent move is managed based on the updated additional information.

### INDUSTRIAL APPLICABILITY

The processing method and apparatus according to the present invention can provide the same functions as those of the move in a rewritable recording medium, even in a write-once recording medium such as that of DVD-R type, and can effectively secure copyright protection while giving consideration to a user's convenience.

### Explanation of Reference Numerals

10... readout section
12... signal re-recording section
14... control section
16... contents storage section
20... write-once recording medium

## Claims

1. A method for moving copy-once contents, in which copy-once contents recorded on a write-once recording medium are moved to a recording medium which is different from the write-once recording medium, said method comprising:
moving the copy-once contents to the different recording medium; and
recording, in an information recording area of the write-once recording medium, a signal which is different from that recorded in the information recording area, thereby making it impossible to reproduce information of the write-once recording medium.

2. The method for moving copy-once contents according to claim 1, wherein recording of the different signal is carried out using a power that is at least one fourth of an optimum recording power.

3. The method for moving copy-once contents according to claim 1, wherein recording of the different signal is carried out using a power that is at least one half of an optimum recording power.

4. The method for moving copy-once contents according to claim 1, wherein recording in the information recording area of the write-once recording medium is carried out when the copy-once contents are moved to the different recording medium.

5. An apparatus for moving copy-once contents, which causes copy-once contents recorded on a write-once recording medium to be moved to a recording medium which is different from the write-once recording medium, said apparatus comprising:
a moving means for moving the copy-once contents to the different recording medium; and
a signal re-recording means that, when the moving means moves the copy-once contents to the different recording medium, records, in an information recording area of the write-once recording medium, a signal which is different from that recorded in the information recording area.

6. The apparatus for moving copy-once contents according to claim 5, wherein recording of the different signal is carried out using a power that is at least one fourth of an optimum recording power.

7. The apparatus for moving copy-once contents according to claim 5, wherein recording of the different signal is carried out using a power that is at least one half of an optimum recording power.

8. An apparatus for moving copy-once contents, comprising:
a readout section that reads out copy-once contents recorded on a write-once recording medium;
a signal re-recording section that records, in an information recording area of the write-once recording medium, a signal which is different from that recorded in the information recording area; and
a control section that allows the copy-once contents to be stored in a recording medium which is different from the write-once recording medium.

9. The apparatus for moving copy-once contents according to claim 8, wherein said apparatus includes a contents storage section in which the copy-once contents read out from the write-once recording medium are stored.

10. The apparatus for moving copy-once contents according to claim 8, wherein recording in the information recording area of the write-once recording medium is carried out when the copy-once contents are moved to a recording medium which is different from the write-once recording medium.

11. The apparatus for moving copy-once contents according to claim 8, wherein recording of the different signal is carried out using a power that is at least one fourth of an optimum recording power.

12. The apparatus for moving copy-once contents according to claim 8, wherein recording of the different signal is carried out using a power that is at least one half of an optimum recording power.

## Amended claims

### Amended claims under Art. 19.1 PCT

**1.** (Amended) A method for moving copy-once contents, in which copy-once contents recorded on a write-once recording medium are moved to a recording medium which is different from the write-once recording medium, said method comprising:
moving the copy-once contents to the different recording medium; and
recording, in an information recording area of the write-once recording medium, a signal which is different from that recorded in the information recording area in an intermittent manner, thereby making it impossible to reproduce information of the write-once recording medium.

**2.** The method for moving copy-once contents according to claim 1, wherein recording of the different signal is carried out using a power that is at least one fourth of an optimum recording power.

**3.** (Canceled)

**4.** The method for moving copy-once contents according to claim 1, wherein recording in the information recording area of the write-once recording medium is carried out when the copy-once contents are moved to the different recording medium.

**5.** (Amended) An apparatus for moving copy-once contents, which causes copy-once contents recorded on a write-once recording medium to be moved to a recording medium which is different from the write-once recording medium, said apparatus comprising:
a moving means for moving the copy-once contents to the different recording medium; and
a signal re-recording means that, when the moving means moves the copy-once contents to the different recording medium, records, in an information recording area of the write-once recording medium, a signal which is different from that recorded in the information recording area in an intermittent manner.

**6.** The apparatus for moving copy-once contents according to claim 5, wherein recording of the different signal is carried out using a power that is at least one fourth of an optimum recording power.

**7.** (Canceled)

**8.** (Amended) An apparatus for moving copy-once contents, comprising:
a readout section that reads out copy-once contents recorded on a write-once recording medium;
a signal re-recording section that records, in an information recording area of the write-once recording medium, a signal which is different from that recorded in the information recording area in an intermittent manner; and
a control section that allows the copy-once contents to be stored in a recording medium which is different from the write-once recording medium.

**9.** The apparatus for moving copy-once contents according to claim 8, wherein said apparatus includes a contents storage section in which the copy-once contents read out from the write-once recording medium are stored.

**10.** The apparatus for moving copy-once contents according to claim 8, wherein recording in the information recording area of the write-once recording medium is carried out when the copy-once contents are moved to a recording medium which is different from the write-once recording medium.

**11.** The apparatus for moving copy-once contents according to claim 8, wherein recording of the different signal is carried out using a power that is at least one fourth of an optimum recording power.

**12.** (Canceled)

**13.** (Added) A method for moving copy-once contents, in which copy-once contents recorded on a write-once recording medium are moved to a recording medium which is different from the write-once recording medium, said method comprising:
moving the copy-once contents to the different recording medium; and
recording, in an information recording area of the write-once recording medium, a signal which is different from that recorded in the information recording area in DC form, thereby making it impossible to reproduce information of the write-once recording medium.

**14.** (Added) An apparatus for moving copy-once contents, which causes copy-once contents recorded on a write-once recording medium to be moved to a recording medium which is different from the write-once recording medium, said apparatus comprising:
a moving means for moving the copy-once contents to the different recording medium; and
a signal re-recording means that, when the moving means moves the copy-once contents to the different recording medium, records, in an information recording area of the write-once recording medium, a signal which is different from that recorded in the information recording area in DC form.

**15.** (Added) An apparatus for moving copy-once contents, comprising:
a readout section that reads out copy-once contents recorded on a write-once recording medium;
a signal re-recording section that records, in an information recording area of the write-once recording medium, a signal which is different from that recorded in the information recording area in DC form; and
a control section that allows the copy-once contents to be stored in a recording medium which is different from the write-once recording medium.
